# EUROPEAN PATENT SPECIFICATION

(11) **EP 2 714 975 B1**
(45) Date of publication and mention of the grant of the patent: **02.12.2026**
(21) Application number: 12792415.7
(22) Date of filing: 24.05.2012
(51) Int. Cl.: D04B 1/18, D01F 6/70, D03D 15/56

(54) **ELASTIC FABRIC**
ELASTISCHES GEWEBE
TISSU ÉLASTIQUE

(30) Priority: 27.05.2011 JP 2011118834; 18.05.2012 JP 2012114192
(43) Date of publication of application: 09.04.2014
(73) Proprietor: Toray Lycra Co., Ltd., Osaka 530-8222 (JP); Invista Technologies S.à r.l., 9000 St. Gallen (CH)
(72) Inventor: ITOH, Shingo, Orsu-shi Shiga 520-8558 (JP); TANAKA, Toshihiro, Orsu-shi Shiga 520-8558 (JP); LIU, Hong, Waynesboro, VA 22980 (US)
(74) Representative: Carpmaels & Ransford LLP
(86) International application number: PCT/US2012/039306
(87) International publication number: WO 2012/166504

(56) References cited:
- WO-A2-2011/081441
- WO-A2-2011/081450
- FR-A1- 2 327 264
- JP-A- 2000 303 351
- JP-A- 2005 154 994
- JP-A- 2009 235 658
- JP-B2- 4 632 351
- KR-A- 19980 016 620
- US-A- 3 635 907
- DATABASE WPI Week 200109, Derwent World Patents Index; AN 2001-074774, XP002730611

## Description

### TECHNICAL FIELD

The present invention relates to elastic fabric, and more particularly relates to elastic fabric that uses high powered polyurethane elastic yarn that can achieve a comfortable fit even in a thin and light fabric compared to conventional elastic fabric containing polyurethane elastic fiber.

### RELATED TECHNOLOGY

Elastic fiber is widely used on account of its excellent stretch and recovery properties for use in stretchable clothing such as leg warmers, inner-wear, and sportswear, use in sanitary products such as disposable diapers and sanitary napkins, as well as use in industrial materials.

Recently uses for polyurethane elastic fiber has widely grown from among other elastic fibers for its very high tenacity, high elastic recovery, excellent heat resistance, and suitable heat set ability when combined with not only synthetic fibers such as nylon yarn and polyester yarn but also natural fibers such as cotton and wool and semi synthetic fibers.

In recent years, consumers have been demanding thinner and lighter material for clothing based on needs for clothes with a softer texture that does not interfere with movement while exercising, and which provides a more comfortable fit, and in conjunction with the increase in two income families, the increasing need for close that dry quickly after washing. Microfibers have already been developed for the so-called hard yarns such as nylon and polyester and have emerged on the market. While in recent years requests for thinner polyurethane have been growing stronger under an environment of broadening use.

Meanwhile, because the same stretch and recovery properties that are available conventionally are required so as not to lose fit even when thinning the fabric, the same acting force and recovery must be maintained even if, for example, fineness is cut by half. In other words, a so-called "high-powered yarn" is demanded in polyurethane elastic fiber having a high acting force and recovery per unit of fineness in the actual use area with 100% to 200% elongation.

A multi-filament elastic yarn is proposed (Patent Document 1) as a means for increasing the acting force and recovery of elastic fiber in which the multi-filament elastic yarn is manufactured by irreversibly elongating polyurethane after melt spinning at a shore hardness of 80 to 95° and cooling then immediately afterwards winding at a speed of no less than 600m/min. However, with this technology, a higher active force can be achieved in which the active force at the time of 100% elongation is between 1.46 to 2.10 cN/dtex compared to a 100% modulus of the conventional polyurethane elastic yarn which is about 0.05 cN/dtex. However, because this technology has a low break elongation at between 145 to 160%, it is difficult to withstand processing at the time of forming the elastic fabric and the formed elasticity in the clothing material does not sufficiently stretch but instead produces clothing that are uncomfortable and have a poor fit.

A manufacturing method for polyurethane urea has been proposed (Patent Document 2) as a means to obtain polyurethane elastic fiber having a high tensile strength, in which a prepolymer is synthesized by reacting a molar excess of organic diisocyanate compound with a polymer diol having hydroxyl groups at both ends, then using the polyurethane urea polymer solution obtained by reacting a diamine compound with the prepolymer, spin the polymer solution at a temperature range of between 90 and 130°C; and a method which adds a specific alkylsulfate salt or sulfate compound having a hydrocarbon group with between 6 and 20 carbons (Patent Document 3). However, this document merely mentions an elasticity modulus and breaking strength at 300%, but there is no implication of increasing the active force and recovery at the time of 100 to 200% elongation for stretching at the time an actual elastic fabric is formed.
FR2327264A1 relates to a partly crystalline polyurethane elastomer containing tertiary nitrogen.
JP2000303351A relates to polyurethane elastic fibers with high hygroscopicity and biodegradability.
US3635907A relates to a process for producing polyurethanes in which a macrodiol is reacted with a diisocyanate containing at least one aromatic radical to form a pre-adduct.
WO2011081450A2 relates to a method for manufacturing polyurethaneurea.
WO2011081441A2 relates to a preparation method of a polyurethaneurea elastic yarn.

### PRIOR ART DOCUMENTS

### PATENT DOCUMENTS

Patent Document 1 Japanese Examined Patent Application H6-86683
Patent Document 2 Japanese Unexamined Patent Application H9 • 59821
Patent Document 3 Patent No. 2968049

### SUMMARY OF THE INVENTION

### PROBLEM TO BE RESOLVED BY THE INVENTION

An objective of the present invention is to provide elastic fabric that has comfortable wear and fit even in thin and light fabric by using a high-powered polyurethane elastic fiber that has at least 1.5 times the active force and recovery per unit fineness at the time of 100 to 200% elongation compared to conventional polyurethane elastic fiber.

### MEANS FOR RESOLVING PROBLEMS

The present invention is defined by the claims and relates to:
(1) An elastic fabric comprising a polyurethane elastic fiber made of a poly(tetramethylene ether) glycol of number average molecular weight of 600 to 1100, an organic diisocyanate compound, and a diamine compound, wherein the molar ratio of the organic diisocyanate compound to the polyol is in the range of 1.2 to less than 1.6.
(2) The elastic fabric according to item (1), wherein a low molecular weight polyol is blended with a high molecular weight polyol.
(3) The elastic fabric according to item (1) or item (2), wherein the polyurethane elastic fiber is spun from a solution-polymerized polyurethane polymer solution by the prepolymer method.
(4) The elastic fabric according to any of item (1) through item (3), wherein the polyurethane polymer is chain extended with a diamine compound and has a terminal group concentration of 5 to 50 meq/kg of the polymer solids.
(5) The elastic fabric according to any of item (1) through item (4), wherein the number average molecular weight of the polyurethaneurea polymer is between 40000 to 150000.
(6) The elastic fabric according to any of item (1) through item (5), wherein the polyurethane elastic fiber is spun by dry spinning of the polyurethaneurea polymer solution.

In one embodiment of the present invention, the fabric includes a spandex fiber prepared from a segmented polyurethaneurea. The polyurethaneurea includes:
(a) a poly(tetramethylene ether) glycol of number average molecular weight of 600 to 1100;
(b) a diisocyanate such as methylene bis(phenylisocyanate) (MDI);
(c) a diamine compound such as ethylenediamine or its mixture with at least one diamine selected from the group consisting of an aliphatic diamine and an alicyclic diamine, each having 2 to 13 carbon atoms;
(d) at least one monoamine, primary or secondary, selected from the group consisting of an aliphatic amine and an alicyclic amine, each having 2 to 12 carbon atoms.

The polyol is a poly(tetramethylene ether) glycol of number average molecular weight of 600 to 1100 (Commercially available examples of suitable polyols include Terathane^{®} 1000 and Terathane^{®} 650 (INVISTA of Wichita, KS).

Examples of polyether polyols include those glycols with two or more hydroxy groups, from ring-opening polymerization and/or copolymerization of ethylene oxide, propylene oxide, trimethylene oxide, tetrahydrofuran, and 3-methyltetrahydrofuran, or from condensation polymerization of a polyhydric alcohol, such as a diol or diol mixtures, with less than 12 carbon atoms in each molecule, such as ethylene glycol, 1,3-propanediol, 1,4-butanediol, 1,5-pentanediol 1,6-hexanediol, neopentyl glycol, 3-methyl-1,5-pentanediol, 1,7-heptanediol, 1,8-octanediol, 1,9-nonanediol, 1,10-decanediol and 1,12-dodecanediol. The desired number average molecular weight may be achieved with a blend or mixture of two or more glycols which may be outside the desired molecular weight range.

Next, aromatic, alicyclic, and aliphatic diisocyanate compounds can be used as the diisocyanates used in the present invention. Examples of aromatic diisocyanate compounds include, for example, diphenyl methane diisocyanate (hereinafter abbreviated as MDI), tolylene diisocyanate, 1,4-diisocyanate benzene, xylylene diisocyanate, and 2,6-naphthalene diisocyanate and the like. Examples of alicyclic and aliphatic diisocyanates include, for example, methylene bis(cyclohexyl isocyanate) (hereinafter abbreviated as H12MDI), isophorone diisocyanate, methyl cyclohexane 2,4-diisocyanate, methyl cyclohexane 2,6-diisocyanate, cyclohexane 1,4-diisocyanate, hexahydroxylylene diisocyanate, hexahydrotolylene diisocyanate, octahydro 1,5-naphthalene diisocyanate and the like.

These diisocyanates can be used individually, or two or more types can be used in combination.

An aromatic diisocyanate compound is preferably used from among these diisocyanate compounds for its excellent strength and heat resistance for elastic fibers, and use of MDI is more preferred. One or more other types of aromatic diisocyanate compounds may be blended with MDI and used. MDI may be a blend of the 2,4' and 4,4'-MDI isomer. One suitable MDI composition contains at least 90% 4,4'-MDI isomer, such as Isonate 125MDR^{™} from Dow Chemical, Desmodur^{®} 44M from Bayer and Lupranate^{®} M from BASF.

In making the polyurethaneurea for spandex, the glycol (i.e., PTMEG of number average molecular weight of 600 to 1100) is first reacted with MDI, optionally with a catalyst present, to form an NCO-terminated prepolymer or a "capped glycol". This reaction is typically carried out, in a form of uniformly blended mixture, with applied heat at temperatures of 60 to 95°C for a period of 1 hour to 6 hours. The amounts of each reaction component, the weight of the glycol (W_{glycol}) and the weight of MDI (W_{mdi}), are regulated by the capping ratio (CR), which is defined as the mole ratio of MDI to glycol as shown below:$CR = \left({W}_{mdi}{/ MW}_{mdi}\right) / \left({W}_{glycol}{/ MW}_{glycol}\right)$ where MW_{mdi} is the molecular weight of MDI (250.26) and MW_{glycol} is the number average molecular weight of the glycol.

The reaction equivalent ratio (molar ratio or capping ratio) of the diisocyanate compound to the polyol is in the range of 1.2 to less than 1.6.

A capping ratio in the range of 1.4 or greater but less than 1.6 is preferred. Within a capping ratio range of 1.3 to 1.7, elastic fiber can be obtained with excellent strength and recoverability as well as excellent workability. However, when greater than 2, spinning becomes problematic as gel is generated during polymerization. Further, unstable quality occurs as portions of the gel create weak yarn. On the other hand, when less than 1.2, heat resistance worsens and stretch to break strength lowers generating quality issues.

Diamine compounds are chain extenders for the polyurethane elastic fiber of the present invention. High recoverability becomes achievable when using diamine compounds.

Examples of diamine compounds that are low molecular weight diamine compounds include ethylene-diamine, 1,2-propanediamine, 1,3-propanediamine, 2-methyl-1,5-pentanediamine, 1,5-pentanediamine, 1,2-diaminebutane, 1,3-diaminebutane, 1-amino-3,3,5-trimethyl-5-aminomethylcyclohexane, 2,2-dimethyl-1,3-diaminopropane, 1,3-diamino-2,2-dimethylbutane, 2,4-diamino-1-methyl cyclohexane, 1,3-pentanediamine, 1,3 cyclohexane diamine, bis(4-amino phenyl)phosphine oxide, hexamethylenediamine, 1,3-cyclohexyldiamine, hexahydromethaphenilenediamine, 2-methyl pentamethylenediamine, 1,7-heptanediamine, 1,8-octanediamine, 1,9-nonanediamine, 1,10-decanediamine, 1,12-dodecanediamine, isophorone diamine, xylylenediamines, bis(4-amino phenyl) phosphine oxide and the like. One or more of these may be mixed and used. A low molecular weight diol compound such as ethylene glycol may be used together to the extent the properties are not damaged.

A diamine compound with 2 to 5 carbons is preferred for the diamine compound, and when considering elastic yarn having superior elongation and elastic recovery and so forth, the use of ethylene diamine or a diamine mixture containing at least 70 mole% of ethylenediamine is particularly preferred. In addition to these chain extenders, a triamine compound (such as diethylene triamine or the like) may be used as well to form a branched structure to the extent that the effect of the present invention is not lost.

In order to control the molecular weight of the obtained polyurethane polymer, a chain terminator is preferred to be used at the time of the chain extension reaction. The mole ratio of the chain extender in regards to the chain terminator when considering stabilizing the yarn properties after spinning is preferred to be between 10 and 20, and more preferably would be between 14 and 18.

Examples of such chain terminators that can be used include mono-alcohol compounds such as n-butanol, and monoamine compounds such as dimethylamine, diethylamine, cyclohexyl amine, and n-hexyl amine. A monoamine compound is preferred, while diethylamine is more preferred. Chain terminators are normally used by blending with chain extenders.

The polymerization method described above for the polyurethane elastic fiber polymerized from polyols, organic diisocyanate compounds, and diamine compounds, is particularly not restricted and either a melt polymerization method or a solution polymerization method may be used as well as other methods, but the solution polymerization method is more preferred. The solution polymerization method has the benefit in that less foreign matter such as gel is generated within the polyurethane.

When using the solution polymerization method, a polyurethaneurea solution can be obtained by performing polymerization using polyols, organic diisocyanate compounds, and diamine compounds and the like as raw materials within an organic solvent, for example, DMAc, DMF, DMSO, NMP, or a solution that uses these as primary components. This reaction method is also not particularly restricted, and examples include, a one-shot method in which each raw material is introduced into the solution and dissolved then heated to a suitable temperature to cause a reaction, or a prepolymer method in which a prepolymer is formed in a nonsolvent system by first reacting the polyol and the organic diisocyanate compound and afterwards dissolving the prepolymer in a solvent and reacting with the diamine compound for chain extension to synthesize polyurethaneurea. The prepolymer method is preferred.

Moreover, mixing one or two types of catalysts, such as an amine series catalyst and an organic metal catalyst, is preferred when synthesizing the polyurethane.

Examples of amine catalysts include N,N-dimethylcyclohexylamine, N,N-dimethylbenzylamine, triethyl amine, N-methylmorpholine, N-ethylmorpholine, N,N,N',N'-tetramethylethylene diamine, N,N,N',N'-tetramethyl-1,3-propanediamine, N,N,N',N'-tetramethylhexane diamine, bis-2-dimethylamineethylether, N,N,N', N'-pentamethyldiethylenetriamine, tetramethylguanidine, triethylenediamine, N,N'-dimethylpiperazine, N-methyl-N'-dimethylaminoethyl-piperazine, N-(2-dimethylaminoethyl)moropholine, 1-methylimidazole, 1,2-dimethylimidazole, N,N-dimethylaminoethanol, N,N,N'-trimethylaminoethylethanolamine, N-methyl-N'-(2-hydroxyethyl) piperazine, 2,4,6-tris(dimethylaminomethyl)phenol, N,N-dimethylaminihexanol, and triethanolamin, and the like.

Examples of organic metal catalysts include tin octanoate, dibutyltin dilaurate, iron octanoate dibutyl, and the like.

The polyurethane concentration within the obtained polyurethaneurea polymerization solution is not particularly restricted, but when considering the stretch and recovery properties of the obtained elastic yarn, the molecular weight of polyurethane and the solution viscosity, the polymer solids in the solution is preferably between 20 and 60 wt%. Between 30 and 50 wt% is more preferable, and between 35 and 45 wt% is further preferable.

The terminal group concentration in the obtained polyurethaneurea polymerization solution derived from the diamine compound of polyurethane is preferably between 5 and 50 meq/kg, and more preferably between 10 and 45 meq/kg. When the terminal group concentration becomes higher than 50 meq/kg, the molecular weight of the polymer is shortened which instead lowers the active force and recoverability. In addition, when the terminal group concentration is less than 10 meq/kg, a portion will gel with the increase in molecular weight causing inconsistent quality as areas of low strength and elasticity are generated, and this causes problems such as lowering productivity due to the difficulty in raising the concentration in consideration of solution viscosity.

Further, measurement of the terminal group concentration derived from the diamine compound of the polyurethane elastic yarn is performed as follows. DMAc is added to the polyurethane solution to make a solution of 1.77 wt% of polyurethane concentration. Next, using an automatic titrator GT-100 made by Mitsubishi chemical, potentiometric titration is performed with p-toluene sulfonic acid (0.01N) to obtain the total content (A) of the primary amine and the secondary amine. Next, salicyl aldehyde (20% isopropyl alcohol solution) is added to the similarly adjusted polyurethane solution and reacted with the primary amine, and thereafter, potentiometric titration is performed on the secondary amine with p-toluene sulfonic acid (0.01N) to obtain the secondary amine content (B). The terminal group concentration derived from the amine compound is calculated according to the following equation.

### Effective terminal amine value (meq/kg) = (A)-(B)

In an additional embodiment, the polyurethaneurea useful for preparing spandex may be described in terms of the weight percentage of NCO groups after the completion of the capping reaction. After the capping reaction is complete when all of the hydroxy (-OH) groups from the glycol molecules are consumed by the isocyanate (-NCO) groups from MDI to form a urethane bond, the weight percentage of the NCO groups, %NCO, left on the prepolymer can be determined. This experimentally determined %NCO should be matching the theoretically calculated %NCO result, determined by the capping ratio (CR), as the following: $% NCO = \frac{8404 \times \left(CR-1\right)}{{MW}_{glycol} + CR \times {MW}_{mdi}}$

In one embodiment of the present invention, the preferred %NCO range of the prepolymer is 2.60 to 3.80.

The number average molecular weight of the polyurethaneurea polymer used in the present invention, from the perspective of obtaining a fiber with high recoverability and strength, is preferably within the range between 40000 and 150000 for the number average molecular weight. Moreover, the molecular weight is measured by GPC and calculated based on polystyrene standards.

Examples of ultraviolet absorbing agents, antioxidants, and gas resistant stabilizers that can be contained in the polyurethane elastic fiber include, hindered phenol medicinal agents such as BHT and Sumitomo Chemical's "Sumilizer" GA-80, various benzotriazole series medicinal agents such as "Tinuvin", phosphorus medicinal agents such as Sumitomo Chemical's "Sumilizer" P-16, various hindered amine medicinal agents such as "Tinuvin", an inorganic pigment such as zinc oxide, titanium oxide, or carbon black, a metallic soap such as magnesium stearate, and an anti bacterial that contains silver, zinc, or a compound of these, a deodorizer, a lubricant such as silicon or mineral oil or the like, various antistatic agents such as barium sulfate, cerium oxide, betaine, and phosphates. In order to further increase resistance to especially light and various nitric oxides, nitric oxide scavengers such as HN-150 made by Japan Hydrazine, Inc., thermal oxidative stabilizers such as Sumitomo Chemical's "Sumilizer" GA-80, light stabilizers such as Sumitomo Chemical's "Sumilizer" 300 #622, and the like, can be used.

These agents may be added to the polyurethane solution until spinning, and the adding or blending method thereof can be selected at discretion. As a representative method, blending by a static mixer after adding to the spinning solution, or a stirring method, are preferably used. The additives are preferably added to the solution at this point. The use of a solution enables the additives to be added evenly into the polyurethane solution.

The spinning method at the time of forming the polyurethane elastic fiber by spinning polyurethane obtained by the solution polymerization method is not particularly restricted, and known methods such as dry spinning and wet spinning can be suitably used. However, dry spinning is preferred when considering productivity from the perspective that stable spinning is possible for all degrees of fineness from thin to thick yarn.

The fineness of the polyurethane elastic yarn of the present invention is not particularly restricted to a cross-sectional shape or the like. For example, a cross-sectional shape of the yarn may be circular or it may be flat.

In addition, the dry spinning method is not particularly restricted, and spinning may be performed by appropriately selecting spinning conditions and so forth that match the spinning equipment and desired properties.

For example, because the residual strain and initial stress of the polyurethane elastic fiber are particularly susceptible to the speed ratio of the Godet roller to winder, the properties are preferably determined appropriately according to the target use of the yarn, and generally, the speed ratio of the Godet roller to winder is preferably winding within a range of 1.1 and 1.8. Moreover, when considering improving the strength of the obtained polyurethane elastic fiber, a spinning rate of at least 250m/min is preferred.

The fabric of the present invention is configured by using polyurethane elastic fibers as described above. The fabric may be configured from only the polyurethane elastic fibers, but the effect of the present invention can be achieved even in combination elastic fabric in which, for example, polyester yarn or nylon yarn or the like is combined therewith.

**In** other words, material made by combining the polyurethane elastic fibers with polyester yarn or nylon yarn will be able to achieve a compression fit with a fineness of 33 dtex or 22 dtex in the polyurethane elastic fibers described in the present invention that was previously not possible to achieve with use of the 44 dtex yarn fineness in the conventional polyurethane elastic fibers thereby enabling a comfortable compression and fit with thinner and lighter material which improves the fit of clothing because thinning and lightening of the fabric is possible.

**In** addition, the fabric may also be used for knit and woven fabrics. It may be used for knit fabrics with warp knit, weft knit or circular knit, and it may be used in any woven structure such as plain fabric, twill weave, or the like.

### EXAMPLES

The present invention will be described in detail using the following examples: 1-3, 7 and 9-19. However, the present invention is not restricted by these embodiments. Measurement of the Active Force and Recoverability of the Polyurethane Elastic Fiber

The polyurethane elastic fiber was measured by using an Instron 550 tensile strength testing machine to get the active force and recoverability of the polyurethane elastic fiber.

A 5 cm length of test material was stretched 200% at a tensile strength of 50 cm/min and repeated 5 times. The active force of the first time and the active force and recoverability of the fifth time were measured.

### Creation and Evaluation of the Elastic Fabric

A 44 dtex polyurethane elastic fiber was elongated to three times its length and covered with a polyamide processed yarn (trademark "Kupe" made by Toray, Inc. 33 DTEX, 26 Filaments) at a twist rate of 800T/m, to make a single covered yarn (SCY) with S-twists and Z-twists.
**In** addition, S-twist SCY is fed into a feed opening 1,3 of a Panst knitting machine (Lonati, 400 needle count) at 1.0g knitting tension, and the Z-twist SCY is fed into a 2,4 opening to knit knitted fabric.

Next, dye processing of the knit fabric is performed as indicated below to obtain knitted tights.
(1) Preset: vacuum dried, 90°C x 10 min.
(2) Dye: 2.0 owf% of "Lanaset" (registered trademark) Black B is used for the dye made by Chiba Specialty Chemicals, Inc. and processed for 60 min at 90°C to dye black. Acetic acid and ammonium sulfate were implemented for pH adjustment at the time of dying.
(3) Finally, softening processing is performed and completed through set processing (Panst Setting Machine, Set: 115°C x 10 sec, dry: 120°C x 30 sec).

The stretch ability and support strength of the obtained knitted fabric underwent the following sensory evaluations.

| | |
|---|---|
| Stretch Ability Evaluation Points | 3: Excellent stretch ability |
| | 2: Slightly lacking stretch ability |
| | 1: Lacks stretch ability |
| Support Strength Evaluation Points: | 3: Excellent support |
| | 2: Slightly lacking support |
| | 1: Lacks Support |

### Example 1

A prepolymer is obtained by reacting 390g of polytetramethylene ether glycol (PTMEG) with a molecular weight of 1000 with 151.12g of 4,4'-diphenylmethane diisocyanate (MDI) in a nitrogen atmosphere in a nonsolvent state at 80°C for 3 hours. The residual isocyanate group after the reaction was 3.33 wt%.

540g of the obtained prepolymer is dissolved in 1166g of DMAc, and the chain extender solution in which 132.48g of 10 wt% ethylenediamine/DMAc solution is blended with 9.76g of 10 wt% diethylamine/DMAc solution is added while stirring vigorously at 40°C to obtain a viscosity adjusted polymer solution of 30 wt% concentration. The terminal group concentration derived by the diamine compound of this polymer solution was 24meq/kg.

A polyurethane solution generated by reacting t-butyldiethanolamine with methylene-bis(4-cyclohexylisocyanate) is blended with a condensation polymer of p-cresol and divinyl benzene in a 2 to 1 weight ratio into this polyurethane polymer solution, then DMAc is added, to prepare a 30 wt% additive solution. 96 parts by weight of the polyurethane polymer solution is blended with 4 parts by weight of the additive solution to make the

spinning concentrate solution. This is dry spun at a speed of 650m/min with a speed ratio for the Godet roller to winding machine at 1.25 to obtain a 33 DTEX 4 filament yarn.

The properties of the obtained yarn are shown in Table 1, and the results of sensory evaluation for stretch ability and support strength for the obtained knit fabric are shown in Table 2.

**Table 1:**

| | **Ex 1** | **Ex 2** | **Ex 3** | **Ex 4 (Ref.)** | **Ex 5 (Ref.)** | **Ex 6 (Ref.)** | **Comp Ex 1** | **Comp Ex 2** | **Comp Ex 3** | **Comp Ex 4** | **Comp Ex** 5 |
|---|---|---|---|---|---|---|---|---|---|---|---|
| PTMG molecular weight | 1000 | 1000 | 650 | 1400 | 1400 | 1200 | 1800 | 1800 | 1800 | 1800 | 1000 |
| Molecular weight ratio | 2.6 | 2.6 | 2.4 | 2.6 | 2.6 | 2.5 | 8.0 | 2.0 | 2.0 | 2.0 | 2.1 |
| Molecular weight distribution | 6.95 | 6.95 | 7.66 | 2.95 | 2.95 | 3.06 | 1.77 | 1.77 | 1.77 | 1.77 | 4.66 |
| Diamine terminal group concentration | 24 meq/kg | 24 meq/kg | 19.5 meq/kg | 31 meq/kg | 31 meq/kg | 26 meq/kg | 28 meq/kg | 28 meq/kg | 40 meq/kg | 40 meq/kg | 24 meq/kg |
| Polymer weight average molecular weight | 108000 | 108000 | 106000 | 118000 | 118000 | 120000 | 112000 | 112000 | 103000 | 103000 | 121000 |
| Fineness (DTEX) | 44 | 22 | 22 | 44 | 22 | 22 | 44 | 22 | 44 | 22 | 22 |
| 1 cycle 100% stress (cN) | 4.2 | 2.1 | 2.5 | 3.5 | 1.7 | 1.8 | 2.2 | 1.1 | 2.0 | 1.0 | 2.1 |
| 1 cycle 200% stress (cN) | 7.9 | 4.0 | 6.8 | 8.0 | 3.9 | 4.0 | 5.0 | 2.5 | 5.1 | 2.5 | 3.9 |
| 5 cycle 100% stress (cN) | 3.5 | 1.8 | 1.7 | 2.2 | 1.1 | 1.1 | 1.4 | 0.7 | 1.3 | 0.6 | 0.7 |
| 5 cycle 200% stress (cN) | 6.6 | 3.4 | 3.2 | 6.9 | 3.3 | 3.4 | 4.3 | 2.1 | 4.1 | 2.0 | 3.3 |
| 5 cycle 100% recovery (cN) | 1.5 | 0.8 | 0.8 | 1.6 | 0.8 | 0.8 | 1.0 | 0.5 | 0.9 | 0.4 | 0.5 |
| 5 cycle 200% recovery (cN) | 5.0 | 2.6 | 2.6 | 5.6 | 2.6 | 2.7 | 3.5 | 1.7 | 3.3 | 1.7 | 2.0 |
| Breaking elongation (%) | 430 | 430 | 390 | 460 | 450 | 440 | 470 | 470 | 440 | 435 | 410 |
| Breaking strength (cN/DTEX) | 0.9 | 0.9 | 0.7 | 1.0 | 1.0 | 1.0 | 1.0 | 1.0 | 0.9 | 0.9 | 0.7 |

| | | | | | | | | | | | |
|---|---|---|---|---|---|---|---|---|---|---|---|
| *Ref. = reference example | | | | | | | | | | | |

**Table 2:**

| | **Fineness (DTEX)** | **Stretch Ability Evaluation** | **Support Strength Evaluation** | **Overall Evaluation** |
|---|---|---|---|---|
| Example 1 | 44 | 2.5 | 3.0 | 5.5 |
| Example 2 | 22 | 2.5 | 2.2 | 4.7 |
| Example 3 | 22 | 2.4 | 2.0 | 4.4 |
| Example 4 (Ref.) | 44 | 2.8 | 3.0 | 5.8 |
| Example 5 (Ref.) | 22 | 2.6 | 2.2 | 4.8 |
| Example 6 (Ref.) | 22 | 2.8 | 2.4 | 5.2 |
| Comparative Example 1 | 44 | 2.7 | 2.4 | 5.1 |
| Comparative Example 2 | 22 | 2.6 | 1.0 | 3.6 |
| Comparative Example 3 | 44 | 2.7 | 2.6 | 5.3 |
| Comparative Example 4 | 22 | 2.4 | 1.0 | 3.4 |
| Comparative Example 5 | 22 | 1.2 | 1.8 | 3.0 |

| | | | | |
|---|---|---|---|---|
| *Ref. = reference example | | | | |

### Example 2

With the exception of using PTMEG adjusted to a molecular weight of 1000 by blending 35 parts by weight of PTMEG with a molecular weight of 650 with 65 parts by weight of PTMEG with a molecular weight 1400, spinning was performed to prepare spinning concentrate solution by adding an additive solution to the polymerized polyurethane polymer solution under the same conditions as Example 1.

The properties of the obtained yarn are shown in Table 1, and the results of sensory evaluation for stretch ability and support strength for the knit fabric are shown in Table 2.

### Example 3

A prepolymer is obtained by reacting 390g of PTMEG with a molecular weight of 650 with 210g of MDI in a nitrogen atmosphere in a nonsolvent state at 80°C for 3 hours. The residual isocyanate group after the reaction was 3.36 wt%.

600g of the obtained prepolymer is dissolved in 1294.78g of DMAc, and the chain extender solution in which 149.04g of 10 wt% ethylenediamine/DMAc solution is blended with 8.78g of 10 wt% diethylamine/DMAc solution is added while stirring vigorously at 40°C to obtain a viscosity adjusted polymer solution of 30 wt% concentration. The terminal group concentration derived by the diamine compound of this polymer solution was 19.5 meq/kg.

The additive solution was blended into the polyurethane polymer solution in the same manner as Example 1 to prepare a spinning concentrate solution and perform spinning. The properties of the obtained yarn are shown in Table 1, and the results of sensory evaluation for stretch ability and support strength for the knit fabric are shown in Table 2.

### Example 4 (Reference)

A prepolymer is obtained by reacting 400g of PTMEG with a molecular weight of 1400 with 121.42g of MDI in a nitrogen atmosphere in a nonsolvent state at 80°C for 3 hours. The residual isocyanate group after the reaction was 3.22 wt%.

520g of the obtained prepolymer is dissolved in 1122.66g of DMAc, and the chain extender solution in which 123.86g of 10 wt% ethylenediamine/DMAc solution is blended with 12.16g of 10 wt% diethylamine/DMAc solution is added while stirring vigorously at 40 °C to obtain a viscosity adjusted polymer solution of 30 wt% concentration. The terminal group concentration derived by the diamine compound of this polymer solution was 31 meq/kg.

The additive solution was blended into the polyurethane polymer solution in the same manner as Example 1 to prepare a spinning concentrate solution and perform spinning. The properties of the obtained yarn are shown in Table 1, and the results of sensory evaluation for stretch ability and support strength for the knit fabric are shown in Table 2.

### Example 5 (Reference)

With the exception of using PTMEG adjusted to a molecular weight of 1400 by blending 50 parts by weight of PTMEG with a molecular weight of 1000 with 50 parts by weight of PTMG with a molecular weight 1800, spinning was performed to prepare spinning concentrate solution by adding an additive solution to the polymerized polyurethane polymer solution under the same conditions as Example 4.

The properties of the obtained yarn are shown in Table 1, and the results of sensory evaluation for stretch ability and support strength for the knit fabric are shown in Table 2.

### Example 6 (Reference)

A prepolymer is obtained by reacting 400g of PTMEG adjusted to a molecular weight of 1200 by blending 62.5 parts by weight of PTMEG with a molecular weight of 1000 with 37.5 parts by weight PTMEG with a molecular weight of 1800, with 137.50g of MDI in a nitrogen atmosphere in a nonsolvent state at 80°C for 3 hours. The residual isocyanate group after the reaction was 3.38 wt%.

535g of the obtained prepolymer is dissolved in 1152.04g of DMAc, and the chain extender solution in which 133.92g of 10 wt% ethylenediamine/DMAc solution is blended with 10.52g of 10 wt% diethylamine/DMAc solution is added while stirring vigorously at 40°C to obtain a viscosity adjusted polymer solution of 30 wt% concentration. The terminal group concentration derived by the diamine compound of this polymer solution was 26 meq/kg.

The additive solution was blended into the polyurethane polymer solution in the same manner as Example 1 to prepare a spinning concentrate solution and perform spinning. The properties of the obtained yarn are shown in Table 1, and the results of sensory evaluation for stretch ability and support strength for the knit fabric are shown in Table 2.

### Comparative Example 1

A prepolymer is obtained by reacting 400g of PTMEG with a molecular weight of 1800 with 87.78g of MDI in a nitrogen atmosphere in a nonsolvent state at 90°C for 2 hours. The residual isocyanate group after the reaction was 2.22 wt%.

485g of the obtained prepolymer is dissolved in 1071.67g of DMAc, and the chain extender solution in which 79.58g of 10 wt% ethylenediamine/DMAc solution is blended with 10.41g of 10 wt% diethylamine/DMAc solution is added while stirring vigorously at 40 °C to obtain a viscosity adjusted polymer solution of 30 wt% concentration. The terminal group concentration derived by the diamine compound of this polymer solution was 28 meq/kg.

The additive solution was blended into the polyurethane polymer solution in the same manner as Example 1 to prepare a spinning concentrate solution and perform spinning. The properties of the obtained yarn are shown in Table 1, and the results of sensory evaluation for stretch ability and support strength for the knit fabric are shown in Table 2.

### Comparative Example 2

A prepolymer is obtained by reacting 400g of PTMEG with a molecular weight of 1800 with 105.56g of MDI in a nitrogen atmosphere in a nonsolvent state at 90°C for 2 hours. The residual isocyanate group after the reaction was 3.32 wt%.

505g of the obtained prepolymer is dissolved in 1084.80g of DMAc, and the chain extender solution in which 124.06g of 10 wt% ethylenediamine/DMAc solution is blended with 16.24g of 10 wt% diethylamine/DMAc solution is added while stirring vigorously at 40 °C to obtain a viscosity adjusted polymer solution of 30 wt% concentration. The terminal group concentration derived by the diamine compound of this polymer solution was 40 meq/kg.

The additive solution was blended into the polyurethane polymer solution in the same manner as Example 1 to prepare a spinning concentrate solution and perform spinning. The properties of the obtained yarn are shown in Table 1, and the results of sensory evaluation for stretch ability and support strength for the knit fabric are shown in Table 2.

For Examples 7-19 the following test methods were used:
The NCO content of the capped glycols was determined according to the method of S. Siggia, "Quantitative Organic Analysis via Functional Group", 3rd Edition, Wiley & Sons, New York, pages 559-561 (1963).

The strength and elastic properties of the spandex fibers were measured in accordance with the general method of ASTM D 2731-72. Three threads, a 2-inch (5-cm) gauge length and a 0-300% elongation cycle were used for each of the measurements. The samples were cycled five times at a constant elongation rate of 50 centimeters per minute. Load power (TP2), the stress on the spandex during initial extension, was measured on the first cycle at 200% extension and is reported as grams/denier. Unload power (TM2) is the stress at an extension of 200% for the fifth unload cycle and is also reported in grams/denier. Percent elongation at break (ELO) and tenacity (TEN) were measured on a sixth extension cycle. Percent set was also measured on samples that had been subjected to five 0-300% elongation/relaxation cycles. The percent set, %Set, was then calculated as $% Set = 100 \left({L}_{f}-{L}_{o}\right) / {L}_{o} ,$ where Lo and Lf are respectively the filament (yarn) length when held straight without tension before and after the five elongation/relaxation cycles.

Additionally, instead of 0-300% stretch cycles, the spandex threads of 140 denier were stretched and cycled to a fixed tension, e.g., 15 grams of force. The stress-strain properties including load power, unload power and %Set were measured and recorded.

Alternatively, the tensile properties of the spandex fibers were measured in the first cycle to the breaking point using an Instron tensile tester equipped with a Textechno grip. The load power at 200% stretch (TT2), breaking elongation (TEL) and breaking tenacity (TTN) were recorded.

### Example 7

To a 2000 ml Pyrex^{®} glass reaction kettle, which was equipped with an air pressure driven stirrer, a heating mantle and a thermocouple temperature measurement, was charged 250.0 grams of Terathane^{®} 1000 glycol (commercially available from Invista, S. à. r. L., of Wichita, KS and Wilmington, DE) and 93.88 grams of molten Isonate 125MDR (commercially available from the Dow Company, Midland, Michigan). The reaction mixture was stirred and heated to 90°C in a glove box with nitrogen atmosphere, and was held at this temperature for 120 minutes with continuous stirring to complete the reaction for the formation of the prepolymer. The NCO content, or %NCO, of the capped glycol prepolymer was determined to be 2.962. To the viscous prepolymer, 628.91 grams of N,N-dimethylacetamide (DMAc) was added with vigorous stirring. Once the prepolymer was fully dissolved in the solvent, a mixture of 123.35 grams of the chain extender solution (containing ethylenediamine and 2-methyl-1,5-pentanediamine at the mole ratio of 90 to 10) and 4.75 grams of the chain terminator solution (containing diethylamine), both at the concentration of 2.0 miliequivalent per gram of DMAc solution, was added into the diluted and dissolved prepolymer solution within 10 seconds with stirring. The resulted viscous polymer solution was allowed to mix for another 15 minutes through continued stirring, and was then stored in a Nalgene^{®} plastic bottle for spinning into fibers.

### Example 8 (Reference)

Same procedures and ingredients as Example 7 were used to prepare Example 8 polymer solution, except for the changes in ingredient quantities and the determined %NCO of the prepolymer as shown below:

| | |
|---|---|
| Terathane^{®} 1000 | 250.00 grams |
| Isonate 125MDR | 100.12 grams |
| Determined %NCO | 3.505% |
| DMAc | 622.13 grams |
| Extender solution | 148.32 grams |
| Terminator solution | 5.04 grams |

### Example 9

Same procedures and ingredients as Example 7 were used to prepare Example 9 polymer solution, except for the changes in ingredient quantities and the determined %NCO of the prepolymer as shown below:

| | |
|---|---|
| Terathane^{®} 1000 | 250.00 grams |
| Isonate 125MDR | 96.99 grams |
| Determined %NCO | 3.235% |
| DMAc | 625.17 grams |
| Extender solution | 135.73 grams |
| Terminator solution | 5.35 grams |

### Example 10

Same procedures and ingredients as Example 7 were used to prepare Example 10 polymer solution, except for the changes in ingredient quantities and the determined %NCO of the prepolymer as shown below:

| | |
|---|---|
| Terathane^{®} 1000 | 250.00 grams |
| Isonate 125MDR | 90.73 grams |
| Determined %NCO | 2.665% |
| DMAc | 632.51 grams |
| Extender solution | 110.82 grams |
| Terminator solution | 4.35 grams |

### Example 11

Same procedures and ingredients as Example 7 were used to prepare Example 11 polymer solution, except that Terathane^{®}650 glycol (commercially available from Invista, S. à. r. L., of Wichita, KS and Wilmington, DE) was used instead of Terathane^{®}1000. Accordingly, changes in ingredient quantities and the determined %NCO of the prepolymer were also made as shown below:

| | |
|---|---|
| Terathane^{®} 650 | 250.00 grams |
| Isonate 125MDR | 130.22 grams |
| Determined %NCO | 2.818% |
| DMAc | 697.78 grams |
| Extender solution | 133.78 grams |
| Terminator solution | 4.87 grams |

### Example 12

Same procedures and ingredients as Example 11 were used to prepare Example 12 polymer solution, except that the ingredient quantities and the determined %NCO of the prepolymer were changed as showed below:

| | |
|---|---|
| Terathane^{®} 650 | 250.00 grams |
| Isonate 125MDR | 135.26 grams |
| Determined %NCO | 3.201% |
| DMAc | 691.60 grams |
| Extender solution | 153.89 grams |
| Terminator solution | 5.93 grams |

### Example 13

Same procedures and ingredients as Example 11 were used to prepare Example 13 polymer solution, except that the chain extender solution, still at the concentration of 2.0 miliequvalent per gram, was made up with a mixture of ethylenedaimine and 2-methyl-1,5-pentanediamine at the mole ratio of 80 to 20. Changes in ingredient quantities and the determined %NCO of the prepolymer were also made as shown below:

| | |
|---|---|
| Terathane^{®} 650 | 250.00 grams |
| Isonate 125MDR | 135.26 grams |
| Determined %NCO | 3.316% |
| DMAc | 700.15 grams |
| Extender solution | 133.78 grams |
| Terminator solution | 4.87 grams |

### Example 14

Same procedures and ingredients as Example 7 were used to prepare Example 14 polymer solution, except that the ingredient quantities and the determined %NCO of the prepolymer were changed as showed below:

| | |
|---|---|
| Terathane^{®} 650 | 250.00 grams |
| Isonate 125MDR | 140.44 grams |
| Determined %NCO | 3.585% |
| DMAc | 688.33 grams |
| Extender solution | 174.53 grams |
| Terminator solution | 7.05 grams |

### Example 15

Same procedures and ingredients as Example 11 were used to prepare Example 15 polymer solution, except that the chain extender solution, still at the concentration of 2.0 miliequvalent per gram, was made up with ethylenediamine only in DMAc. Changes in ingredient quantities and the determined %NCO of the prepolymer were also made as shown below:

| | |
|---|---|
| Terathane^{®} 650 | 250.00 grams |
| Isonate 125MDR | 125.33 grams |
| Determined %NCO | 2.603% |
| DMAc | 669.81 grams |
| Extender solution | 114.20 grams |
| Terminator solution | 6.129 grams |

### Example 16

Same procedures and ingredients as Example 15 were used to prepare Example 16 polymer solution, except that the ingredient quantities and the determined %NCO of the prepolymer were changed as showed below:

| | |
|---|---|
| Terathane^{®} 650 | 250.00 grams |
| Isonate 125MDR | 130.22 grams |
| Determined %NCO | 2.845% |
| DMAc | 693.59 grams |
| Extender solution | 133.78 grams |
| Terminator solution | 6.99 grams |

### Comparative Example 3

Same procedures and ingredients as Example 7 were used to prepare the Comparative Example 3 polymer solution, except that Terathane^{®} 1800 glycol (commercially available from Invista, S. à. r. L., of Wichita, KS and Wilmington, DE) was used instead of Terathane^{®}1000. Accordingly, changes in ingredient quantities and the determined %NCO of the prepolymer were also made as shown below:

| | |
|---|---|
| Terathane^{®} 1800 | 250.00 grams |
| Isonate 125MDR | 58.68 grams |
| Determined %NCO | 2.614% |
| DMAc | 578.12 grams |
| Extender solution | 93.93 grams |
| Terminator solution | 3.94 grams |

The above polymer solutions made in the laboratory were spun into 40-denier, 3-filament yarns through a drying spinning process. The DMAc solvent was removed with heated nitrogen gas of 400°C flushing through the spinning cell at a rate of 6.8 kg/hr (15 lbs/hr). The cell wall temperatures were controlled between 290 and 210°C in multiple heating zones. The dried yarn was applied with a lubricating finish and wound up on a tube at the bottom of the spinning cell at the speed of 610 meters per minute (667 yards per minute (ypm)). The tensile properties of the as-spun yarn, after 24 hours ageing on the tube at room temperatures, were measured and given in Table 3 below.

**Table 3:**

| **EXAMPLES** | TP2(gpd) | TM2(gpd) | ELO (%) | TEN(gpd) | Set(%) | TT2(g) | TEL(%) | TTN(g) |
|---|---|---|---|---|---|---|---|---|
| Comparative 3 | 0.1027 | 0.0261 | 578 | 1.139 | 25.50 | 5.41 | 517 | 55.65 |
| Example 7 | 0.1462 | 0.0372 | 476 | 1.275 | 36.85 | 7.21 | 418 | 61.34 |
| Example 8 (Ref.) | 0.1693 | 0.0367 | 453 | 1.001 | 43.10 | 9.64 | 336 | 37.91 |
| Example 9 | 0.1488 | 0.0360 | 486 | 1.126 | 42.56 | 7.71 | 397 | 49.28 |
| Example 10 | 0.1412 | 0.0392 | 450 | 1.192 | 32.93 | 6.70 | 424 | 71.68 |
| Example 11 | 0.3398 | 0.0359 | 349 | 1.127 | 40.52 | 15.15 | 325 | 63.33 |
| Example 12 | 0.4092 | 0.0385 | 354 | 1.330 | 44.81 | 20.24 | 292 | 61.73 |
| Example 13 | 0.3492 | 0.0346 | 346 | 0.949 | 45.55 | 20.12 | 316 | 71.85 |
| Example 14 | 0.4752 | 0.0307 | 339 | 0.908 | 51.21 | 24.08 | 292 | 63.43 |
| Example 15 | 0.2743 | 0.0427 | 356 | 1.103 | 42.70 | 11.75 | 340 | 63.96 |
| Example 16 | 0.2595 | 0.0395 | 372 | 1.075 | 45.81 | 13.51 | 342 | 62.28 |

| | | | | | | | | |
|---|---|---|---|---|---|---|---|---|
| *Ref. = reference example | | | | | | | | |

It can be seen that the examples 7 and 9-16 of the present invention exhibit significantly higher modulus (load power TP2 and TT2) and higher recovery power (unload power TM2) than the comparative example 3.

### Example 17

The polymer solution was made in the same way as Example 9, and it was spun into 140-denier, 10-filament yarn. The heated nitrogen gas delivered to the spinning cell was at 400°C with a flow rate of 9.1 kg/hr (20 lbs/hr). The cell wall temperatures were controlled between 290 and 210°C in multiple heating zones. The dried yarn was applied with a lubricating finish and wound up on a tube at the bottom of the spinning cell at the speed of 610 meters per minute (667 yards per minute (ypm)).

### Example 18

The polymer solution was made in the same way as Example 11, and it was spun into 140-denier, 10-filament yarn using the same spinning conditions as Example 17 except that the wound-up speed was at 550 meters per minute (600 yards per minute (ypm)).

### Example 19

The polymer solution was made in the same way as Example 12, and it was spun into 140-denier, 10-filament yarn using the same spinning conditions as Example 18.

### Comparative Example 4

The polymer solution was obtained from the commercial production in making LYCRA^{®} T162C spandex fibers, and it was spun into 140-denier, 10-filament yarn using the same spinning conditions as Example 17.

### Comparative Example 5

The polymer solution was obtained from the commercial production in making LYCRA^{®} T127 spandex fibers, and it was spun into 140-denier, 10-filament yarn using the same spinning conditions as Example 17.

The tensile properties of the as-spun 140-denier yarn, after 24 hours ageing on the tube at room temperatures, were measured and given in Table 4.

**Table 4:**

| EXAMPLES | TP2(gpd) | TM2(gpd) | ELO(%) | TEN(gpd) | Set(%) |
|---|---|---|---|---|---|
| Comparative 4 | 13.96 | 3.53 | 525 | 120.9 | 22.18 |
| Comparative 5 | 12.66 | 3.31 | 547 | 104.8 | 24.15 |
| Example 17 | 18.01 | 4.35 | 433 | 90.8 | 42.13 |
| Example 18 | 28.12 | 4.64 | 333 | 88.1 | 39.02 |
| Example 19 | 29.57 | 4.73 | 371 | 110.8 | 47.19 |

It can be seen from Table 4 that the examples 17-19 from the present invention have substantially higher modulus (or load power TP2) and higher recovery power (or unload power TM2) in comparison to incumbent commercial products (comparative 4 and 5).

## Claims

1. An elastic fabric comprising a polyurethane elastic fiber made of a poly(tetramethylene ether) glycol of number average molecular weight of 600 to 1100, an organic diisocyanate compound, and a diamine compound, wherein the molar ratio of the organic diisocyanate compound to the polyol is in the range of 1.2 to less than 1.6.

2. The elastic fabric according to claim 1, wherein a polyol of low molecular weight is blended with a polyol of high molecular weight.

3. The elastic fabric according to claim 1 or 2, wherein the polyurethane elastic fiber is spun from a solution-polymerized polyurethane polymer solution by the prepolymer method.

4. The elastic fabric according to any of claim 1 through claim 3, wherein the polyurethane polymer is derived from a diamine compound and has a terminal group concentration of 5 to 50 meq/kg.

5. The elastic fabric according to any of claim 1 through claim 4, wherein the number average molecular weight of the polyurethane polymer is between 40000 to 150000 as measured by GPC and calculated based on polystyrene standards.

6. The elastic fabric according to any of claim 1 through claim 5, wherein the polyurethane elastic fiber is spun by dry spinning the polyurethane polymer solution.

## Patentansprüche

1. Elastisches Gewebe, umfassend eine elastische Polyurethanfaser aus einem Poly(tetramethylenether)glykol mit einem zahlenmittleren Molekulargewicht von 600 bis 1100, einer organischen Diisocyanatverbindung und einer Diaminverbindung, wobei das Molverhältnis von organischer Diisocyanatverbindung zum Polyol im Bereich von 1,2 bis weniger als 1,6 liegt.

2. Elastisches Gewebe nach Anspruch 1, wobei ein Polyol mit niedrigem Molekulargewicht mit einem Polyol mit hohem Molekulargewicht gemischt ist.

3. Elastisches Gewebe nach Anspruch 1 oder 2, wobei die elastische Polyurethanfaser aus einer lösungspolymerisierten Polyurethanpolymerlösung nach dem Prepolymerverfahren gesponnen wird.

4. Elastisches Gewebe nach einem der Ansprüche 1 bis 3, wobei sich das Polyurethanpolymer von einer Diaminverbindung ableitet und eine Endgruppenkonzentration von 5 bis 50 meq/kg aufweist.

5. Elastisches Gewebe nach einem der Ansprüche 1 bis 4, wobei das zahlenmittlere Molekulargewichts des Polyurethanpolymers zwischen 40000 und 150000 liegt, gemessen durch GPC gemessen und berechnet basierend auf Polystyrolstandards.

6. Elastisches Gewebe nach einem der Ansprüche 1 bis 5, wobei die elastische Polyurethanfaser durch Trockenspinnen der Polyurethanpolymerlösung gesponnen wird.

## Revendications

1. Tissu élastique comprenant une fibre élastique de polyuréthane composée d'un poly(éther de tétraméthylène)glycol ayant un poids moléculaire moyen en nombre de 600 à 1 100, d'un composé diisocyanate organique et d'un composé diamine, dans lequel le rapport molaire du composé diisocyanate organique sur le polyol est dans la plage de 1,2 à moins de 1,6.

2. Tissu élastique selon la revendication 1, dans lequel un polyol de faible poids moléculaire est mélangé avec un polyol de poids moléculaire élevé.

3. Tissu élastique selon la revendication 1 ou 2, dans lequel la fibre élastique de polyuréthane est filée à partir d'une solution de polymère de polyuréthane polymérisé en solution par le procédé du prépolymère.

4. Tissu élastique selon l'une quelconque des revendications 1 à 3, dans lequel le polymère de polyuréthane est dérivé d'un composé diamine et a une concentration en groupes terminaux de 5 à 50 méq/kg.

5. Tissu élastique selon l'une quelconque des revendications 1 à 4, dans lequel le poids moléculaire moyen en nombre du polymère de polyuréthane est compris entre 40 000 et 150 000, mesuré par GPC et calculé sur la base de références de polystyrène.

6. Tissu élastique selon l'une quelconque des revendications 1 à 5, dans lequel la fibre élastique de polyuréthane est filée par filage à sec de la solution de polymère de polyuréthane.
